# EUROPEAN PATENT SPECIFICATION

(11) **EP 4 257 945 B1**
(45) Date of publication and mention of the grant of the patent: **26.03.2025**
(21) Application number: 22167319.7
(22) Date of filing: 08.04.2022
(51) Int. Cl.: G01L 5/13, B60D 1/01, B60H 1/00

(54) **TRAILER IN THE FORM OF A TRANSPORT ENGINELESS REFRIGERATION UNIT WITH A KING PIN COMPRISING AN INTEGRATED SENSOR AND CORRESPONDING METHOD**
ANHÄNGER IN FORM EINES TRANSPORTMOTORLOSEN KÜHLAGGREGATS MIT EINEM ZAPFEN MIT INTEGRIERTEM SENSOR UND ENTSPRECHENDES VERFAHREN
REMORQUE SOUS FORME D'UNITÉ DE RÉFRIGÉRATION SANS MOTEUR DE TRANSPORT AVEC UN PIVOT D'ATTELAGE COMPRENANT UN CAPTEUR INTÉGRÉ ET MÉTHODE CORRESPONDANTE

(43) Date of publication of application: 11.10.2023
(60) Divisional application: 25158408.2
(73) Proprietor: Carrier Corporation, Palm Beach Gardens, FL 33418 (US)
(72) Inventor: DUCHER,Gael, 76520 Franqueville Saint Pierre (FR)
(74) Representative: Dehns

(56) References cited:
- EP-A1- 2 899 101
- DE-A1- 102006 057 327
- US-A1- 2007 103 280
- US-A1- 2019 265 112

## Description

The present invention relates to a trailer in the form of a transport engineless refrigeration and a related mothod.

Typically, cold chain distribution systems are used to transport and distribute cargo, or more specifically perishable goods and environmentally sensitive goods (herein referred to as perishable goods) that may be susceptible to temperature, humidity, and other environmental factors. Perishable goods may include but are not limited to fruits, vegetables, grains, beans, nuts, eggs, dairy, seed, flowers, meat, poultry, fish, ice, and pharmaceuticals. Advantageously, cold chain distribution systems allow perishable goods to be effectively transported and distributed without damage or other undesirable effects.

Refrigerated trailers are commonly used to transport perishable goods in a cold chain distribution system. Often, refrigerated trailers include a refrigeration unit for the supply of cold air to a cargo space and together these are referred to as transportation refrigeration units, or TRUs. The refrigeration unit of such TRUs may comprise a compressor, a condenser with one or more associated condenser fans, an expansion device, and an evaporator with one or more associated evaporator fans, which are connected via appropriate refrigerant lines in a closed refrigerant flow circuit. The refrigeration unit may be mounted to the TRU trailer in operative association with a cargo space defined within the trailer for maintaining a controlled temperature environment within the cargo space. Air or an air/gas mixture is drawn from the interior volume of the cargo space by means of the evaporator fan(s) associated with the evaporator, passed through the airside of the evaporator in heat exchange relationship with refrigerant whereby the refrigerant absorbs heat from the air, thereby cooling the air. The cooled air is then supplied back to the cargo space.

On commercially available TRUs, the compressor, and typically other components of the transportation refrigeration unit, may be powered during transit by an on-board battery that is charged by a generator. In such systems, a prime mover of the system drives a generator that generates power. A known type of electrically driven TRU involves rigidly coupling a wheel axle of the TRU to a generator (of the rotational type) to generate electrical power. The generated power is stored in a battery and can be used to power an electric motor for driving the refrigerant compressor of the transportation refrigeration unit and also can be used for powering electric fan motors, for driving the condenser and evaporator motors, and for powering electric heaters associated with the evaporator. In addition, the battery can supply power to the other components of the TRU.

EP 2 899 101 A1 discloses a kingpin for mounting to a semitrailer. The kingpin comprises a pin body detachably engageable with a towing vehicle-side semitrailer coupling and a sensor device disposed at the pin body and configured to detect a driving state of the semitrailer.

US 2019/265112 A1 discloses a magneto-elastically-based active force sensor, used with a tow coupling between a towed and a towing vehicle, which outputs a signal useful for determining forces acting on the coupling. The outputted force information may be provided by processor-enabled embedded software algorithms that take inputs from the force sensor and other sensors, may be used by one or more vehicle systems during operating of the vehicle, such as engine, braking, stability, safety, and informational systems. The force sensor includes directionally-sensitive magnetic field sensing elements inside the sensor, and shielding may be used around the sensors to reduce the influence of external magnetic fields on the sensing elements. The force sensor may be used with different tow coupling devices installed on different types of automobile cars and trucks.

DE 10 2006 057327 A1 discloses a device for determining trailer force on the trailer of a truck trailer. The device comprises a base element, which is fastened on a frame of a trailer traction machine. A saddle plate is provided, which is fixed on the base element. The base element has a receiver opening, which is formed for receiving a kingpin of a semitrailer. Two 3-component force measuring elements are provided, which are arranged between the saddle plate and the base element.

US 2007/103280 A1 discloses a towing load detection system for detecting whether a vehicle is towing an object. The system includes a controller and at least one proximity sensor operable to detect the presence of the object being towed. The controller is operable to cause a vehicle effect when the proximity sensor detects that the vehicle is towing an object.

It is desirable to improve the efficiency of TRUs equipped with such generators and batteries, by optimising the times and/or magnitudes at which the generator charges the battery.

The invention is defined by independent claims 1 and 10, while preferred embodiments are defined in claims 2-9, 11 and 12.

Described herein is a kingpin for connecting a trailer to a tractor, the kingpin comprising: an integrated sensor arranged to measure a force applied to the kingpin, and a data connection arranged to transmit data of a force measured by the integrated sensor.

A kingpin, also referred to as a fifth-wheel coupling, is part of a trailer/TRU that provides the link between a tractor (via the fifth wheel of the tractor) and the trailer/TRU. By providing the kingpin with the integrated torque sensor it may be possible to determine whether, and optionally to what magnitude, a trailer connected to the kingpin is being pushed or pulled by a tractor connected to the kingpin. The sensor may measure a vector force (both direction and magnitude). This data may be obtained in real time and is valuable in deciding when to use the generator to generate power, thereby improving fuel efficiency. For example, if the trailer is being pushed, or decelerated, by the tractor then it is clear that the system as a whole is slowing down and so it would be beneficial to use the kinetic energy of the trailer to generate power via the generator. In contrast, if the trailer is being pulled, or accelerated, by the tractor then it is clear that the system as whole is accelerating and so it would be beneficial to not use the kinetic energy of the trailer to generate power as doing so would reduce the extent of acceleration. This is a simplified explanation of the value of the data from the kingpin sensor, and it will be appreciated that there are many other factors that may be considered when determining the optimal time and/or an optimal magnitude of power to generate with the generator. Other possible factors are discussed in more detail below.

In commercially available TRUs it is not presently possible to obtain data on the acceleration/deceleration of the trailer. Instead, International Standards ISO 11992 and ISO 7638 only provide for a CAN bus connection from the trailer to the truck that provides braking and suspension information of the trailer to the truck. These standards do not allow for any further data connections (e.g. a dedicated data connection relating to acceleration/deceleration). The present invention overcomes this problem by incorporating a torque sensor directly into the kingpin of a trailer to gather this data. As a result, no further data connections between the truck and trailer are required. The present invention is therefore suitable for use with the above mentioned International Standards.

The kingpin may comprise a plurality of integrated sensors. Each sensor may be arranged to measure to measure a force applied to the kingpin. Each sensor may be arranged to transmit data of a measured force via the data connection or each may have its own data connection for this purpose. This may provide a greater amount of data and/or more accurate data. Teachings below relating to specific of the sensor may apply to any/each of the plurality of sensors.

The sensor may be a torque sensor. This may allow a reaction force on the trailer (produced by the tractor) to be measured.

The sensor may extend partway through the kingpin in the vertical direction. The sensor may be configured to measure forces acting on the kingpin in the horizontal direction. In this way, the sensors may be arranged to measured forces in the same plane as push/pull forces on the trailer and a connected tractor.

The invention provides a trailer in the form of a transport engineless refrigeration unit as defined in claim 1.

The kingpin may include any of the optional features described herein.

According to the invention, the control unit is configured to control when the generator generates power and/or to what magnitude the generator generates power based at least in part on data of a force measured by the integrated sensor of the kingpin.

As mentioned above, this may optimise the efficiency of the TRU, by better control of the time/magnitude of generating power.

The trailer may comprise an accelerometer configured to measure acceleration of the trailer and/or a clinometer configured to measure an incline of the trailer. The control unit may be configured to control when the generator generates power and/or to what magnitude the generator generates power based at least in part on a measured acceleration of the trailer and/or a measured incline of the trailer.

By also utilising acceleration and/or incline measurements, control of the generator can be further optimised. For example, if the trailer moves onto a downhill gradient but there is no push or pull force (i.e. it is moving at a steady speed), then it would be beneficial to generate power using the generator as it is likely to accelerate due to gravitational forces.

The trailer may comprise a speedometer configured the measure a speed of the trailer; and/or a brake sensor configured to detect a status of a brake of the trailer. The control unit may be configured to control when the generator generates power and/or to what magnitude the generator generates power based at least in part on a measured speed of the trailer and/or a status of the brake of the trailer.

By utilising information on speed, more effective control of the generator may be achieved, as the power generated may be dependent on the speed at which the trailer is moving. By utilising information on the status of the brake, a driver's intention may be determined (e.g. they have pressed the brake sharply to decelerate quickly). This information may be useful in determining when/to what magnitude power may be generated, e.g. a desire for sharp declaration from a high speed may be optimal for power generation, as kinetic energy is used to power the generator rather than being wasted.

The trailer may comprise a weight sensor to measure the mass of trailer. The control unit may be configured to control when the generator generates power and/or to what magnitude the generator generates power based at least in part on the mass of the trailer.

By utilising information on the mass of the trailer, a better approach to power generation may be taken as the mass of the trailer has a direct effect on the forces required to accelerate/decelerate and on kinetic energy.

The trailer may comprise a sensor configured to measure a state of charge of a battery. The control unit may be configured to control when the generator generates power and/or to what magnitude the generator generates power based at least in part on a measured state of charge of the battery. The control unit may control the generator to generate power if the state of charge is below a predetermined threshold regardless of other measurements/data.

By utilising information on the state of charge of battery it may be easily determined whether a battery needs to be charged and by how much. For example, if the state of charge of a battery is very low the generator may generate power regardless of the other information acquired in order to ensure that the batter does not run out of charge. This is particularly important when a battery is used to cool a cargo space, as otherwise the cargo could be spoiled.

The control unit may be configured to control when the generator generates power and/or to what magnitude the generator generates power based at least in part on power requirements of the transport engineless refrigeration unit. For example, if no power is required to chill a cargo space (e.g. the trailer is empty) then the generator may not charge the battery and/or the battery may not power the refrigeration unit.

According to another aspect the present invention provides a vehicle comprising a tractor and a trailer according to the the invention wherein the vehicle comprises: a data connection between the tractor and the trailer, and the tractor comprises: a speedometer configured the measure a speed of the tractor; and/or a brake sensor configured to detect a status of the brake of the tractor, wherein the speedometer and/or the brake sensor are connected to the control unit of the trailer via the data connection and the control unit is configured to control when the generator generates power and/or to what magnitude the generator generates power based at least in part on a measured speed of the tractor and/or a status of the brake of the tractor.

The trailer may include any of the optional features described herein.

By utilising a data connection between the tractor and trailer, the speedometer and/or brake sensor of the tractor can supply data to be used in optimising the control of the generator.

The tractor may comprise a fuel consumption sensor configured to measure fuel consumption of the tractor and/or a pedal position sensor configured to measure a position of an accelerator pedal, brake pedal or clutch. The control unit may be configured to control when the generator generates power and/or to what magnitude the generator generates power based at least in part on fuel consumption of the tractor and/or a pedal position.

The vehicle may comprise a telematics unit arranged to send measurements/data between the tractor and trailer and/or to a remote server. The telematics unit may be positioned in the TRU. In this way the data described herein may be stored for future use and optimisation processes. For example, control methods described herein may be altered based at least in part on measurements/data stored on a remote server.

The integrated sensor may be a torque sensor and the kingpin may include any of the optional features discussed in relation to the first aspect.

According to yet another aspect, the present invention provides a method of optimising control of a trailer connected to a tractor as defined in claim 10.

By optimal it may be meant best in the interest of fuel efficiency, optionally taking into account other system requirements such as a state of charge of a battery and fuel level of a tractor.

The method is performed by the controller described above.

The determining of an optimal time for the generator to generate power and/or an optimal magnitude of power to generate may additionally be based on any one or a combination of: a measured acceleration of the trailer; a measured incline of the trailer; a measured speed of the trailer; a status of a brake of the trailer; a mass of the trailer; a measured state of charge of the battery; and power requirements of the transport engineless refrigeration unit.

The determining of an optimal time for the generator to generate power and/or an optimal magnitude of power to generate may additionally be based on any one or a combination of: a measured speed of the tractor; a status of the brake of the tractor; fuel consumption of the tractor; fuel level of the tractor; a position of an accelerator pedal, brake pedal or clutch of the tractor.

Certain preferred embodiments of the invention will now be described, by way of example only, and with reference to the accompanying drawings, in which:
Figure 1 shows a schematic of a commercially available vehicle system comprising a tractor and a transport refrigeration unit;
Figure 2 shows a schematic of a vehicle system comprising a tractor and a transport refrigeration unit including a kingpin with an integrated sensor;
Figure 3 shows a schematic of a kingpin comprising an integrated torque sensor;
Figure 4a shows the kingpin of Figure 3 when pulling, or accelerating, a trailer;
Figure 4b shows the kingpin of Figure 3 when pushing, or decelerating a trailer; and
Figure 5 shows a table of determined controls for a generator based on data input from sensors.

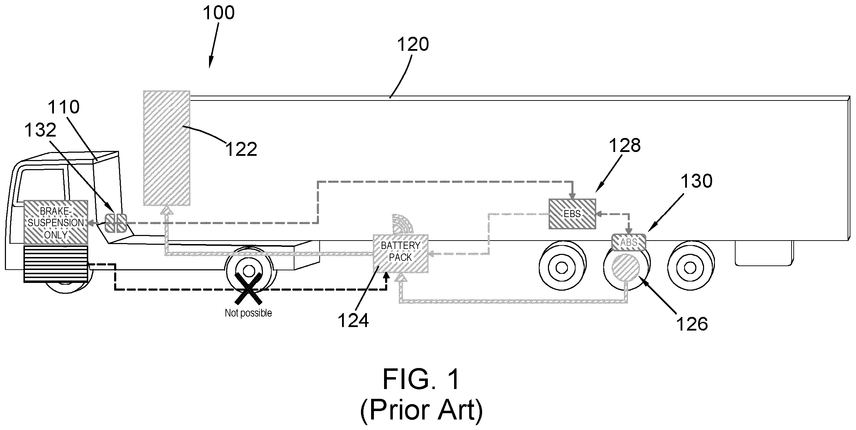

With reference to Figure 1, a commercially available vehicle system 100 is shown. The vehicle system 100 comprises a tractor 110 and a trailer 120 in the form of a transport refrigeration unit (TRU). The TRU 120 comprises a refrigeration unit 122 for the refrigeration of a cargo space (not shown). The TRU 120 also comprises a battery pack 124, a generator 126 rigidly coupled to a wheel axle of the transport refrigeration system and arranged to charge the battery, an EBS (braking and suspension measurement) system 128, and ABS (speed measurement) system 130. The battery pack 124 comprises a controller configured to control the generator 126, battery pack 124 and refrigeration unit 122 and receive measurements form the various measurement systems.

The vehicle system 100 also comprises a data connection 132 between the tractor 110 and trailer 120 in the form of a CAN bus. In use, data regarding braking and suspension of the trailer 120 is sent via this connection. However, the connection 128 is not equipped to handle any other data transfer between the tractor and trailer. In particular, there is no way for further cables or connectors to run between the tractor 110 and trailer 120 due to restrictions of International Standards.

In use the generator 126 generates power, and the controller prioritises supply of this power the TRU 120. If the TRU 120 is off, or is not consuming all the generated power, the controller diverts the remaining power to charge the battery 124.

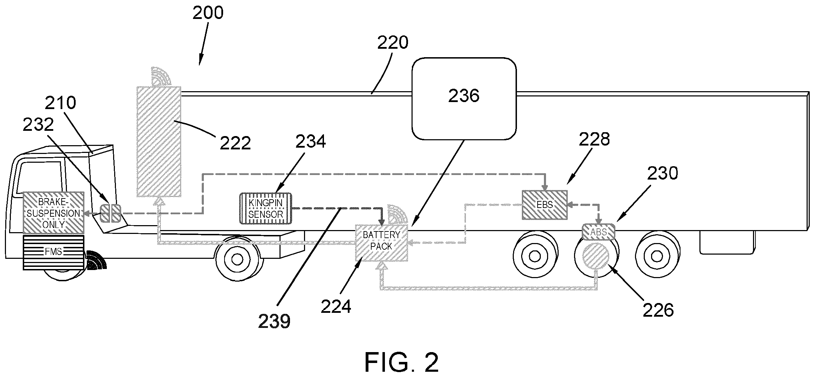

With reference to Figure 2, there is shown a vehicle system 200 including a tractor 210 and a trailer in the form of a transport refrigeration unit (TRU) 220 having a kingpin 234 with an integrated sensor 238 arranged to measure a force applied to the kingpin 234.

The TRU 220 comprises a refrigeration unit 222 for the refrigeration of a cargo space (not shown). The TRU 220 also comprises a battery pack 224 for powering the refrigeration unit 222, a generator 226 rigidly coupled to a wheel axle of the transport refrigeration system and for charging the battery pack 224, an EBS (braking and suspension measurement) system 228, an accelerometer and clinometer system 236, and an ABS (speed measurement) system 230. The battery pack 224 comprises a sensor for measuring its state of charge (SOC) and a controller configured to control the generator 226, battery pack 224 and refrigeration unit 222.

The vehicle system 200 also comprises a data connection 232 between the tractor 210 and trailer 220 in the form of a CAN bus. In use, data regarding braking and suspension of the trailer 220 is sent via this connection.

In use, measurements of a force applied to the kingpin 234 are sent via a data connection 239 to the controller.

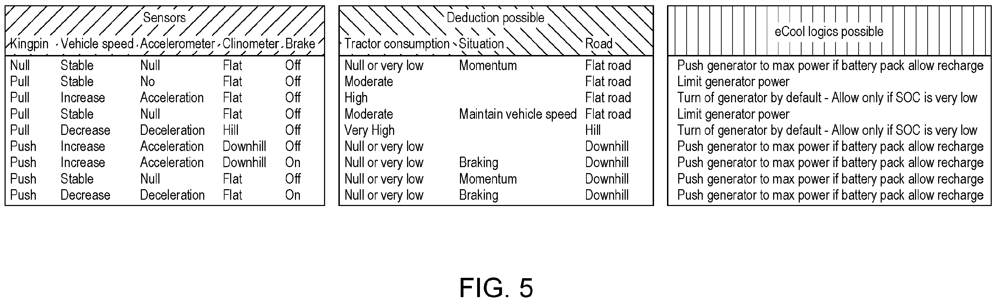

Based at least in part of the measurements of a force applied to the kingpin 234, the controller controls when the generator 226 generates power to charge the battery pack 224. For example, if the trailer 220 is being pushed, or decelerated, by the tractor 210 then it is clear that the system as a whole is slowing down and so it would be beneficial to use the kinetic energy of the trailer 220 to generate power via the generator 226. In contrast, if the trailer 220 is being pulled, or accelerated, by the tractor 210 then it is clear that the system as whole is accelerating and so it would be beneficial to not use the kinetic energy of the trailer 220 to generate power as doing so would reduce the extent of acceleration. This is a simplified explanation of the value of the data from the kingpin sensor, and it will be appreciated that there are many other factors that may be considered when determining the optimal time and/or an optimal magnitude of power to generate with the generator 226. This control and some further factors are described in more detail below, with reference to Figure 5.

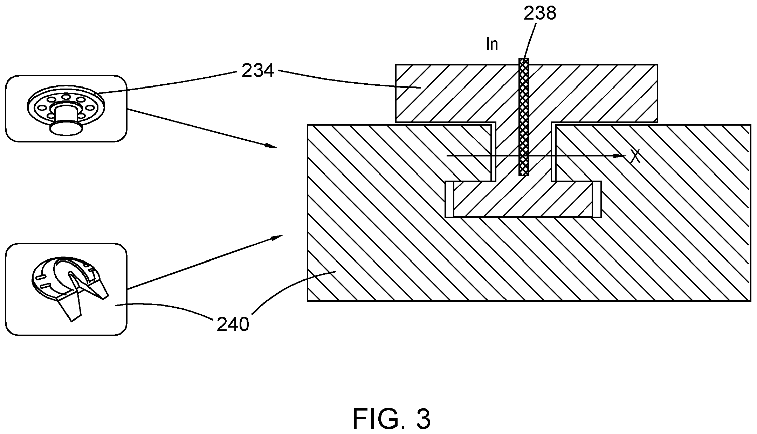

With reference to Figure 3, the kingpin 234 is shown in more detail. Here, it can be seen that the kingpin 234 comprises an integrated torque sensor 238. The torque sensor 238 extends partway through the kingpin 234 in the vertical direction and is configured to measure forces acting in the horizontal plane (labelled X). The kingpin 234 is part of the trailer 220, and connects to the fifth wheel 240 of the tractor 210 in a conventional way to connect the two. It will be appreciated that additional sensors could be incorporated into the kingpin 234.

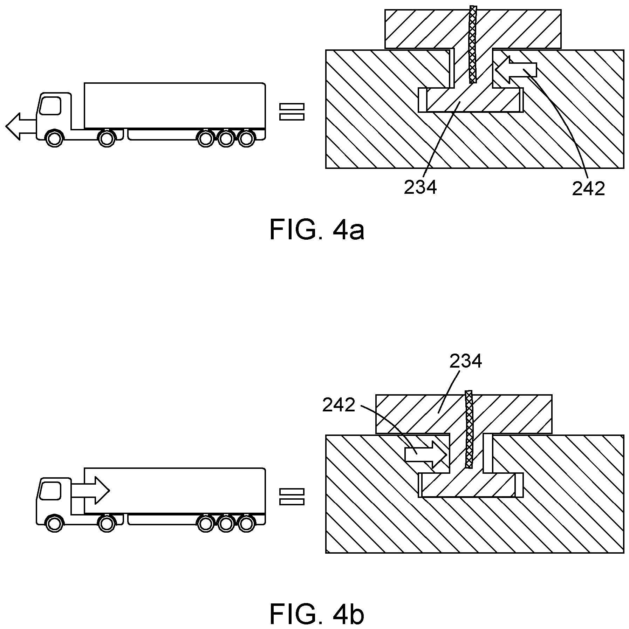

Figure 4a shows the state of the kingpin 234 when the tractor is pulling the trailer, and accelerating it. The force 242 will be measured by the integrated sensor 238 and transmitted to the controller previously discussed.

Figure 4b shows the state of the kingpin 234 when the tractor is pushing, or decelerating the trailer, it is clear that the horizontal force 242 being measured would then be in the opposite direction.

As previously mentioned, there are many other factors that could also be taken into account by the controller when determining when and/or to what extent the generator 226 should generate power. With reference to Figure 5 a number of other considerations are described. In each of these the controller receives data from sensors including the integrated sensor 238 of the kingpin 234 indicating a force, a speedometer indicating vehicle speed, accelerometer indicating vehicle acceleration, clinometer indicating incline and brake sensor indicating a state of the brake on the trailer. These various indications are shown in columns 1 to 5. In addition, the controller receives data regarding a state of charge of the battery pack 224. From the data provided by these sensors it is possible to deduce (amongst other things) three pieces of information: the fuel consumption of the tractor 210; the change in momentum of the trailer 220 and the incline of the road. These are shown in columns 6 to 8.

Combining all of this data, the controller is configured to make decision on whether to use the generator 226 to generate power and to what extent power should be generated. For example, in row 6, it can be seen that it has been deduced that the vehicle 220 is braking on a downhill slope, so it would be beneficial to generate maximum power with the generator 226 in order to recover some of the kinetic energy of the trailer 220 to charge the battery 224 rather than it simply being wasted. In contrast, in row 5 it can be seen that the vehicle 200 is accelerating on an uphill incline and so the fuel consumption of the tractor 210 is very high. In this instance, the controller does not generate power with the generator (unless the state of charge of the battery is dangerously low) as doing so wold increase fuel consumption even more, and reduce acceleration.

Whilst the effectiveness of the present invention is of course improved by the addition of further sensors and data points as discussed above, it should be appreciated that the main development is the provision of a kingpin that has an integrated sensor, as this is what allows for acceleration/deceleration of the trailer to be determined in real time without requiring further data connections to the tractor.

## Claims

1. A trailer (220) in the form of a transport engineless refrigeration unit, the trailer comprising:
a kingpin (234) comprising an integrated sensor (238) arranged to measure a force applied to the kingpin, and a data connection (239) arranged to transmit data of a force measured by the integrated sensor,
a control unit arranged to receive the data of a force measured by the integrated sensor,
a refrigeration unit (222),
a battery (224) arranged to power the refrigeration unit, the control unit and/or the integrated sensor of the kingpin; and
a generator (226) arranged to generate power from an axle of the trailer to charge the battery,
wherein the control unit is configured to control when the generator generates power and/or to what magnitude the generator generates power based at least in part on data of a force (242) measured by the integrated sensor of the kingpin.

2. A trailer (220) as claimed in claim 1, wherein the integrated sensor of the kingpin extends partway through the kingpin in a vertical direction, and the sensor is a torque sensor configured to measure forces (242) acting on the kingpin in a horizontal direction.

3. A trailer (220) as claimed in claim 1 or claim 2, comprising:
an accelerometer (236) configured to measure acceleration of the trailer and/or a clinometer (236) configured to measure an incline of the trailer,
wherein the control unit is configured to control when the generator generates power and/or to what magnitude the generator generates power based at least in part on a measured acceleration of the trailer and/or a measured incline of the trailer.

4. A trailer (220) as claimed in any of claims 1 to 3, comprising:
a speedometer (230) configured the measure a speed of the trailer; and/or a brake sensor (228) configured to detect a status of a brake of the trailer,
wherein the control unit is configured to control when the generator generates power and/or to what magnitude the generator generates power based at least in part on a measured speed of the trailer and/or a status of the brake of the trailer.

5. A trailer (220) as claimed in any of claims 1 to 4, comprising:
a weight sensor to measure the mass of trailer, wherein the control unit is configured to control when the generator generates power and/or to what magnitude the generator generates power based at least in part on the mass of the trailer.

6. A trailer (220) as claimed in any of claims 1 to 5, comprising:
a sensor configured to measure a state of charge of battery, wherein the control unit is configured to control when the generator generates power and/or to what magnitude the generator generates power based at least in part on a measured state of charge of the battery.

7. A vehicle (200) comprising a tractor (210) and a trailer (220) as claimed in any of claims 1 to 6, wherein the vehicle comprises:
a data connection (232) between the tractor and the trailer, and the tractor comprises:
a speedometer configured the measure a speed of the tractor; and/or a brake sensor configured to detect a status of the brake of the tractor,
wherein the speedometer and/or the brake sensor are connected to the control unit of the trailer via the data connection and the control unit is configured to control when the generator generates power and/or to what magnitude the generator generates power based at least in part on a measured speed of the tractor and/or a status of the brake of the tractor.

8. A vehicle (200) as claimed in claim 7, wherein the tractor comprises:
a fuel consumption sensor configured to measure fuel consumption of the tractor and/or a pedal position sensor configured to measure a position of an accelerator pedal, brake pedal or clutch, and the control unit is configured to control when the generator generates power and/or to what magnitude the generator generates power based at least in part on fuel consumption of the tractor and/or a pedal position.

9. A vehicle (200) as claimed in claim 7 or 8, comprising:
a telematics unit arranged to send measurements/data to a remote server.

10. 44 . A method of optimising control of a trailer (210) connected to a tractor (220), the trailer being a transport engineless refrigeration unit comprising:
a kingpin (234) comprising an integrated sensor (238) arranged to measure a force applied to the kingpin,
a control unit arranged to receive the data of a force measured by the integrated sensor;
a refrigeration unit (222),
a battery (224) arranged to power the refrigeration unit, the control unit and/or the integrated sensor of the kingpin; and
a generator (226) arranged to generate power from an axle of the trailer to charge the battery, the method comprising:
determining an optimal time for the generator to generate power and/or an optimal magnitude of power to generate based at least in part on in part on a force measured by the integrated sensor of the kingpin;
wherein the control unit is configured to control when the generator generates power and/or to what magnitude the generator generates power based at least in part on data of a force measured by the integrated sensor of the kingpin.

11. A method as claimed in claim 10, wherein the determining of an optimal time for the generator to generate power and/or an optimal magnitude of power to generate is additionally based on any one or a combination of:
a measured acceleration of the trailer;
a measured incline of the trailer; a measured speed of the trailer; a status of a brake of the trailer; a mass of the trailer;
a measured state of charge of the battery; and
power requirements of the transport engineless refrigeration unit.

12. A method as claimed in claims 10 or 11, wherein the determining of an optimal time for the generator to generate power and/or an optimal magnitude of power to generate is additionally based on any one or a combination of:
a measured speed of the tractor;
a status of the brake of the tractor;
fuel consumption of the tractor;
fuel level of the tractor;
a position of an accelerator pedal, brake pedal or clutch of the tractor.

## Patentansprüche

1. Anhänger (220) in Form eines Transportkühlaggregats ohne Motor, wobei der Anhänger umfasst:
einen Achsschenkelbolzen (234), der einen integrierten Sensor (238), der angeordnet ist, um eine auf den Achsschenkelbolzen ausgeübte Kraft zu messen, und eine Datenverbindung (239) umfasst, die angeordnet ist, um Daten einer durch den integrierten Sensor gemessenen Kraft zu übertragen,
eine Steuereinheit, die angeordnet ist, um die Daten einer Kraft zu empfangen, die durch den integrierten Sensor gemessen wird, ein Kühlaggregat (222),
eine Batterie (224), die angeordnet ist, um das Kühlaggregat, die Steuereinheit und/oder den integrierten Sensor des Achsschenkelbolzens mit Energie zu versorgen; und
einen Generator (226), der angeordnet ist, um Energie von einer Achse des Anhängers zu erzeugen, um die Batterie zu laden,
wobei die Steuereinheit eingerichtet ist, um zu steuern, wann der Generator Energie erzeugt und/oder in welcher Größenordnung der Generator Energie erzeugt, zumindest teilweise basierend auf Daten einer Kraft (242), die durch den integrierten Sensor des Achsschenkelbolzens gemessen wird.

2. Anhänger (220) nach Anspruch 1, wobei sich der integrierte Sensor des Achsschenkelbolzens teilweise durch den Achsschenkelbolzen in einer vertikalen Richtung erstreckt und der Sensor ein Drehmomentsensor ist, der eingerichtet ist, um Kräfte (242) zu messen, die auf den Achsschenkelbolzen in einer horizontalen Richtung wirken.

3. Anhänger (220) nach Anspruch 1 oder Anspruch 2, umfassend:
einen Beschleunigungsmesser (236), der eingerichtet ist, um eine Beschleunigung des Anhängers zu messen, und/oder ein Neigungsmesser (236), der eingerichtet ist, um eine Neigung des Anhängers zu messen,
wobei die Steuereinheit eingerichtet ist, um zu steuern, wann der Generator Energie erzeugt und/oder in welcher Größenordnung der Generator Energie erzeugt, zumindest teilweise basierend auf einer gemessenen Beschleunigung des Anhängers und/oder einer gemessenen Neigung des Anhängers.

4. Anhänger (220) nach einem der Ansprüche 1 bis 3, umfassend:
einen Geschwindigkeitsmesser (230), der eingerichtet ist, um eine Geschwindigkeit des Anhängers zu messen; und/oder einen Bremssensor (228), der eingerichtet ist, einen Zustand einer Bremse des Anhängers zu erfassen,
wobei die Steuereinheit eingerichtet ist, um zu steuern, wann der Generator Energie erzeugt und/oder in welcher Größenordnung der Generator Energie erzeugt, zumindest teilweise basierend auf einer gemessenen Geschwindigkeit des Anhängers und/oder einem Zustand der Bremse des Anhängers.

5. Anhänger (220) nach einem der Ansprüche 1 bis 4, umfassend: einen Gewichtssensor, um die Masse des Anhängers zu messen, wobei die Steuereinheit eingerichtet ist, um zu steuern, wann der Generator Energie erzeugt und/oder in welcher Größenordnung der Generator Energie erzeugt, zumindest teilweise basierend auf der Masse des Anhängers.

6. Anhänger (220) nach einem der Ansprüche 1 bis 5, umfassend: einen Sensor, der eingerichtet ist, um einen Ladezustand der Batterie zu messen, wobei die Steuereinheit eingerichtet ist, um zu steuern, wann der Generator Energie erzeugt und/oder in welcher Größenordnung der Generator Energie erzeugt, zumindest teilweise basierend auf einem gemessenen Ladezustand der Batterie.

7. Fahrzeug (200), umfassend eine Zugmaschine (210) und einen Anhänger (220), nach einem der Ansprüche 1 bis 6, wobei das Fahrzeug umfasst:
eine Datenverbindung (232) zwischen der Zugmaschine und dem Anhänger, und wobei die Zugmaschine umfasst:
einen Geschwindigkeitsmesser, der eingerichtet ist, um eine Geschwindigkeit der Zugmaschine zu messen; und/oder einen Bremssensor, der eingerichtet ist, um einen Zustand der Bremse der Zugmaschine zu erfassen,
wobei der Geschwindigkeitsmesser und/oder der Bremssensor mit der Steuereinheit des Anhängers über die Datenverbindung verbunden sind und die Steuereinheit eingerichtet ist, um zu steuern, wann der Generator Energie erzeugt und/oder in welcher Größenordnung der Generator Energie erzeugt, zumindest teilweise basierend auf einer gemessenen Geschwindigkeit der Zugmaschine und/oder einem Zustand der Bremse der Zugmaschine.

8. Fahrzeug (200) nach Anspruch 7, wobei die Zugmaschine umfasst:
einen Kraftstoffverbrauchssensor, der eingerichtet ist, um einen Kraftstoffverbrauch der Zugmaschine zu messen, und/oder einen Pedalstellungssensor, der eingerichtet ist, um eine Stellung eines Gaspedals, eines Bremspedals oder einer Kupplung zu messen, und wobei die Steuereinheit eingerichtet ist, um zu steuern, wann der Generator Energie erzeugt und/oder in welcher Größenordnung der Generator Energie erzeugt, zumindest teilweise basierend auf einem Kraftstoffverbrauch der Zugmaschine und/oder einer Pedalstellung.

9. Fahrzeug (200) nach Anspruch 7 oder 8, umfassend:
eine Telematikeinheit, die angeordnet ist, um Messungen/Daten an einen entfernte Server zu senden.

10. Verfahren zum Optimieren einer Steuerung eines Anhängers (210), der mit einer Zugmaschine (220) verbunden ist, wobei der Anhänger ein Transportkühlaggregat ohne Motor ist, umfassend:
einen Achsschenkelbolzen (234), der einen integrierten Sensor (238) umfasst, der angeordnet ist, um eine auf den Achsschenkelbolzen ausgeübte Kraft zu messen,
eine Steuereinheit, die angeordnet ist, um die Daten einer Kraft zu empfangen, die durch den integrierten Sensor gemessen wird;
ein Kühlaggregat (222),
eine Batterie (224), die angeordnet ist, um das Kühlaggregat, die Steuereinheit und/oder den integrierten Sensor des Achsschenkelbolzens mit Energie zu versorgen; und
einen Generator (226), der angeordnet ist, um Energie von einer Achse des Anhängers zu erzeugen, um die Batterie zu laden, wobei das Verfahren umfasst:
Bestimmen eines optimalen Zeitpunkts für die Energieerzeugung durch den Generator und/oder einer optimalen Größenordnung der zu erzeugenden Energie, zumindest teilweise basierend auf einer Kraft, die durch den integrierten Sensor des Achsschenkelbolzens gemessen wird;
wobei die Steuereinheit eingerichtet ist, um zu steuern, wann der Generator Energie erzeugt und/oder in welcher Größenordnung der Generator Energie erzeugt, zumindest teilweise basierend auf Daten einer Kraft, die durch den integrierten Sensor des Achsschenkelbolzens gemessen wird.

11. Verfahren nach Anspruch 10, wobei das Bestimmen eines optimalen Zeitpunkts für die Energieerzeugung durch den Generator und/oder einer optimalen Größenordnung der zu erzeugenden Energie zusätzlich basierend auf einem oder einer Kombination aus Folgendem erfolgt:
einer gemessenen Beschleunigung des Anhängers;
einer gemessenen Neigung des Anhängers; einer gemessenen Geschwindigkeit des Anhängers; einem Zustand einer Bremse des Anhängers; einer Masse des Anhängers;
einem gemessenen Ladezustand der Batterie; und
einem Energiebedarf des Transportkühlaggregats ohne Motor.

12. Verfahren nach Anspruch 10 oder 11, wobei das Bestimmen eines optimalen Zeitpunkts für die Energieerzeugung durch den Generator und/oder einer optimalen Größenordnung der zu erzeugenden Energie zusätzlich basierend auf einem oder einer Kombination aus Folgendem erfolgt:
einer gemessenen Geschwindigkeit der Zugmaschine;
einem Zustand der Bremse der Zugmaschine;
einem Kraftstoffverbrauch der Zugmaschine;
einem Kraftstoffstand der Zugmaschine;
einer Stellung eines Gaspedals, eines Bremspedals oder einer Kupplung der Zugmaschine.

## Revendications

1. Remorque (220) sous forme d'unité de réfrigération sans moteur de transport, la remorque comprenant :
un pivot d'attelage (234) comprenant un capteur intégré (238) agencé pour mesurer une force appliquée au pivot d'attelage, et une connexion de données (239) agencée pour transmettre des données d'une force mesurée par le capteur intégré,
une unité de commande agencée pour recevoir les données d'une force mesurée par le capteur intégré,
une unité de réfrigération (222),
une batterie (224) agencée pour alimenter l'unité de réfrigération, l'unité de commande et/ou le capteur intégré du pivot d'attelage ; et
un générateur (226) agencé pour générer de l'énergie à partir d'un essieu de la remorque pour charger la batterie,
dans laquelle l'unité de commande est configurée pour commander le moment où le générateur génère de l'énergie et/ou l'amplitude à laquelle le générateur génère de l'énergie sur la base au moins en partie de données d'une force (242) mesurée par le capteur intégré du pivot d'attelage.

2. Remorque (220) selon la revendication 1, dans laquelle le capteur intégré du pivot d'attelage se prolonge partiellement à travers le pivot d'attelage dans une direction verticale, et le capteur est un capteur de couple configuré pour mesurer des forces (242) agissant sur le pivot d'attelage dans une direction horizontale.

3. Remorque (220) selon la revendication 1 ou la revendication 2, comprenant :
un accéléromètre (236) configuré pour mesurer une accélération de la remorque et/ou un clinomètre (236) configuré pour mesurer une inclinaison de la remorque,
dans laquelle l'unité de commande est configurée pour commander le moment où le générateur génère de l'énergie et/ou l'amplitude à laquelle le générateur génère de l'énergie sur la base au moins en partie d'une accélération mesurée de la remorque et/ou d'une inclinaison mesurée de la remorque.

4. Remorque (220) selon l'une quelconque des revendications 1 à 3, comprenant :
un compteur de vitesse (230) configuré pour mesurer une vitesse de la remorque ; et/ou un capteur de frein (228) configuré pour détecter un état d'un frein de la remorque,
dans laquelle l'unité de commande est configurée pour commander le moment où le générateur génère de l'énergie et/ou l'amplitude à laquelle le générateur génère de l'énergie sur la base au moins en partie d'une vitesse mesurée de la remorque et/ou d'un état du frein de la remorque.

5. Remorque (220) selon l'une quelconque des revendications 1 à 4, comprenant :
un capteur de poids pour mesurer la masse de la remorque, dans laquelle l'unité de commande est configurée pour commander le moment où le générateur génère de l'énergie et/ou l'amplitude à laquelle le générateur génère de l'énergie sur la base au moins en partie de la masse de la remorque.

6. Remorque (220) selon l'une quelconque des revendications 1 à 5, comprenant :
un capteur configuré pour mesurer un état de charge de la batterie, dans laquelle l'unité de commande est configurée pour commander le moment où le générateur génère de l'énergie et/ou l'amplitude à laquelle le générateur génère de l'énergie sur la base au moins en partie d'un état de charge mesuré de la batterie.

7. Véhicule (200) comprenant un tracteur (210) et une remorque (220) selon l'une quelconque des revendications 1 à 6, dans lequel le véhicule comprend :
une connexion de données (232) entre le tracteur et la remorque, et le tracteur comprend :
un compteur de vitesse configuré pour mesurer une vitesse du tracteur ; et/ou un capteur de frein configuré pour détecter un état du frein du tracteur,
dans lequel le compteur de vitesse et/ou le capteur de frein sont connectés à l'unité de commande de la remorque via la connexion de données et l'unité de commande est configurée pour commander le moment où le générateur génère de l'énergie et/ou l'amplitude à laquelle le générateur génère de l'énergie sur la base au moins en partie d'une vitesse mesurée du tracteur et/ou d'un état du frein du tracteur.

8. Véhicule (200) selon la revendication 7, dans lequel le tracteur comprend :
un capteur de consommation de carburant configuré pour mesurer la consommation de carburant du tracteur et/ou un capteur de position de pédale configuré pour mesurer une position d'une pédale d'accélérateur, d'une pédale de frein ou d'un embrayage, et l'unité de commande est configurée pour commander le moment où le générateur génère de l'énergie et/ou l'amplitude à laquelle le générateur génère de l'énergie sur la base au moins en partie de la consommation de carburant du tracteur et/ou d'une position de pédale.

9. Véhicule (200) selon la revendication 7 ou 8, comprenant :
une unité télématique agencée pour envoyer des mesures/données à un serveur distant.

10. Méthode d'optimisation de la commande d'une remorque (210) connectée à un tracteur (220), la remorque étant une unité de réfrigération sans moteur de transport comprenant :
un pivot d'attelage (234) comprenant un capteur intégré (238) agencé pour mesurer une force appliquée au pivot d'attelage,
une unité de commande agencée pour recevoir les données d'une force mesurée par le capteur intégré ;
une unité de réfrigération (222),
une batterie (224) agencée pour alimenter l'unité de réfrigération, l'unité de commande et/ou le capteur intégré du pivot d'attelage ; et
un générateur (226) agencé pour générer de l'énergie à partir d'un essieu de la remorque pour charger la batterie, la méthode comprenant :
la détermination d'un moment optimal pour que le générateur génère de l'énergie et/ou d'une amplitude optimale de l'énergie à générer sur la base au moins en partie d'une force mesurée par le capteur intégré du pivot d'attelage ;
dans laquelle l'unité de commande est configurée pour commander le moment où le générateur génère de l'énergie et/ou l'amplitude à laquelle le générateur génère de l'énergie sur la base au moins en partie de données d'une force mesurée par le capteur intégré du pivot d'attelage.

11. Méthode selon la revendication 10, dans laquelle la détermination d'un moment optimal pour que le générateur génère de l'énergie et/ou d'une amplitude optimale de l'énergie à générer est également basée sur l'un quelconque ou une combinaison des éléments suivants :
une accélération mesurée de la remorque ;
une inclinaison mesurée de la remorque ; une vitesse mesurée de la remorque ; un état d'un frein de la remorque ; une masse de la remorque ;
un état de charge mesuré de la batterie ; et
des besoins en énergie de l'unité de réfrigération sans moteur de transport.

12. Méthode selon les revendications 10 ou 11, dans laquelle la détermination d'un moment optimal pour que le générateur génère de l'énergie et/ou d'une amplitude optimale de l'énergie à générer est également basée sur l'un quelconque ou une combinaison des éléments suivants :
une vitesse mesurée du tracteur ;
un état du frein du tracteur ;
une consommation de carburant du tracteur ;
un niveau de carburant du tracteur ;
une position d'une pédale d'accélérateur, d'une pédale de frein ou d'un embrayage du tracteur.
